# EUROPEAN PATENT APPLICATION

(11) **EP 2 287 951 A1**
(43) Date of publication of application: **23.02.2011**
(21) Application number: 09804735.0
(22) Date of filing: 05.08.2009
(51) Int. Cl.: H01M 8/02, H01M 8/10, H01M 8/24

(54) **FUEL CELL STACK AND FUEL CELL USING SAME**

(30) Priority: 07.08.2008 JP 2008203983
(71) Applicant: Panasonic Corporation, Kadoma-shi Osaka 571-8501 (JP)
(72) Inventor: KOZU, Katsumi, 1-61, Shiromi 2-chome, Chuo-ku, Osaka-shi, Osaka 540-6207 (JP); KIMURA, Tadao, 1-61, Shiromi 2-chome, Chuo-ku, Osaka-shi, Osaka 540-6207 (JP)
(74) Representative: Schwabe - Sandmair - Marx
(86) International application number: PCT/JP2009/003736
(87) International publication number: WO 2010/016248

(57) **Abstract**

A fuel cell stack of the present invention includes: a membrane electrode assembly, formed by stacking an anode electrode, a cathode electrode, and an electrolyte membrane interposed between the anode electrode and the cathode electrode; and a sealing structure for preventing a fuel that is supplied to the anode electrode and a gas containing an oxidizer that is supplied to the cathode electrode from leaking in a direction different from a stacking direction of the membrane electrode assembly, and has a configuration where pressing force of the sealing structure on the anode electrode side is set larger than pressing force on the cathode electrode side. There are provided a fuel cell stack having a sealing structure excellent in assembly property and replacement property, and a fuel cell using the same.

## Description

### TECHNICAL FIELD

The present invention relates to a fuel cell stack and a fuel cell using the same, and particularly relates to a sealing structure of a fuel cell stack.

### BACKGROUND ART

In recent years, electronic equipment are rapidly becoming more portable and cordless, and there is an increasing demand for secondary batteries which are smaller in size and lighter in weight and have higher energy densities, as power sources for driving those equipment. Further, not only application of small consumer batteries, but also technology development on large secondary batteries required to have long-lasting durability and safety, such as those for power storage or an electric vehicle, has been accelerated. Moreover, a fuel cell continuously usable for a long period of time by supply of a fuel has received more attention than the secondary battery that needs charging.

The fuel cell at least has a fuel cell stack including a cell stack, a fuel supply section that supplies a fuel to the cell stack, and an oxidant supply section that supplies an oxidant. Generally, a separator and a membrane electrode assembly, which is made up of an anode electrode, a cathode electrode and an electrolyte membrane interposed between those electrodes, are stacked and end plates are provided on both ends of the stacking direction, to constitute the cell stack. Therefore, the cell stack requires mutually close stacking of the anode electrode, the cathode electrode and the electrolyte membrane. This is not only for bringing about an equivalent electrochemical reaction, but also for preventing leakage of the fuel and oxygen (air) as the oxidant from between the end plate/the separator and the anode electrode/the cathode electrode due to grooves for circulating the fuel and oxygen which are provided on the end plates and the separator.

In order to realize this, there is disclosed a gasket with a structure where a convex lip held on one separator and a convex lip held on the other separator are combined to seal an electrolyte membrane from both sides (e.g. refer to Patent Document 1). However, in the sealing structure of Patent Document 1, the opposing one convex lip cannot be provided in a fuel or oxidant gas flow channel. Hence, with only one convex lip provided, gas leakage or the like may occur due to shortage of sealing surface pressure.

There is then disclosed an example of a structure where, in an area formed with a gas channel or the like that prevents combination of a flat lip held in one separator and a convex lip held in the other separator, a tongue-like projecting section is provided on the periphery of a gas diffusion layer in a membrane electrode assembly and the convex lip or the flat lip and the projecting section are combined, to seal the electrolyte membrane from both sides (e.g. refer to Patent Document 2). However, also in Patent Document 2, with only the flat lip provided on the other separator, an area sealed by combination of the flat lip and the projecting section is generated. Resultantly, due to a wide contact area with the flat lip, high sealing surface pressure may not be obtained, and hence reliable sealing performance cannot be realized.

For solving the above, there is disclosed a gasket for a fuel cell with a structure where a second seal is further provided in an area having the flat lip and the projecting section in combination in the sealing structure of Patent Document 2, to certainly perform sealing by combination of the flat lip and the convex lip or the convex lip and the projecting section (e.g. refer to Patent Document 3). This can improve the sealing surface pressure, to ensure high sealing property.

However, in the sealing structure of the fuel cell stack shown in Patent Document 3, the separator is integrally molded with the convex lip or the flat lip and sealing is performed from both sides of the electrolyte membrane in the membrane electrode assembly, thereby requiring high molding accuracy and positioning accuracy. Similarly, since the fuel and the oxidant are supplied to each cell through manifolds, the periphery of the manifold needs sealing as well as the periphery of the membrane electrode assembly. This requires the convex lip or the flat lip to have high flatness accuracy and uniform pressurization for preventing deterioration in sealing property due to warpage or the like. Consequently, the productivity and assembly efficiency are degraded.

Further, in the case of the integrally molded separator being defective, the separator itself needs replacing, thus making it difficult to lower cost. Moreover, with the double sealing structure formed, a large area is required for sealing. This results in a limited area of a power generating section, and when the area of the power generating section increases, it becomes difficult to reduce the fuel cell stack in size.

### PRIOR ART DOCUMENTS

### PATENT DOCUMENT

[Patent Document 1] Unexamined Japanese Patent Publication No. 2001-185174
[Patent Document 2] Unexamined Japanese Patent Publication No. 2004-303723
[Patent Document 3] Unexamined Japanese Patent Publication No. 2008-97899

### DISCLOSURE OF THE INVENTION

The present invention provides a fuel cell stack having a sealing structure excellent in assembly property and replacement property, and a fuel cell using the same. A fuel cell stack of the present invention includes: a membrane electrode assembly, formed by stacking an anode electrode, a cathode electrode, and an electrolyte membrane interposed between the anode electrode and the cathode electrode; and a sealing structure for preventing a fuel that is supplied to the anode electrode and a gas containing an oxidant that is supplied to the cathode electrode from leaking in a direction different from a stacking direction of the membrane electrode assembly. Pressing force of the sealing structure on the anode electrode side is set larger than pressing force on the cathode electrode side. The sealing structure is made up of the sealing member which is at least provided with a ringed substrate that makes the anode electrode and the cathode electrode present inside, and a ringed elastic body formed on the substrate.

It is thereby possible to reliably seal leakage of the fuel from the anode electrode side by high pressing force of the sealing structure. Further, it is possible to realize a fuel cell stack, in which the substrate prevents displacement associated with deformation of the elastic body and which is easy to assemble and replace owing to the substrate that can be processed with high accuracy and has high shape stability.

According to the present invention, it is possible to realize with a simple configuration a fuel cell stack having high positioning accuracy, excellent sealing property and high production efficiency, and a fuel cell using the same.

### BRIEF DESCRIPTION OF THE DRAWINGS

FIG. 1 is a block diagram showing a configuration of a fuel cell in Embodiment 1 of the present invention.
FIG. 2 is a sectional schematic view explaining a power generating operation of the fuel cell in Embodiment 1 of the present invention.
FIG. 3A is an exploded perspective view of a fuel cell stack in Embodiment 1 of the present invention.
FIG. 3B is a sectional view taken along line 3B-3B of FIG. 3A.
FIG. 4A is a plan view of a membrane electrode assembly of the fuel cell stack in Embodiment 1 of the present invention.
FIG. 4B is a sectional view taken along line 4B-4B of FIG. 4A.
FIG. 5A is a plan view of a sealing member of the fuel cell stack in Embodiment 1 of the present invention.
FIG. 5B is a sectional view taken along line 5B-5B of FIG. 5A.
FIG. 6A is a plan view of an anode-side end plate of the fuel cell stack in Embodiment 1 of the present invention.
FIG. 6B is a sectional view taken along line 6B-6B of FIG. 6A.
FIG. 6C is a sectional view taken along line 6C-6C of FIG. 6A.
FIG. 6D is a sectional view taken along line 6D-6D of FIG. 6A.
FIG. 7A is a plan view of a cathode-side end plate of the fuel cell stack in Embodiment 1 of the present invention.
FIG. 7B is a sectional view taken along line 7B-7B of FIG. 7A.
FIG. 7C is a sectional view taken along line 7C-7C of FIG. 7A.
FIG. 7D is a sectional view taken along line 7D-7D of FIG. 7A.
FIG. 8A is a plan view explaining a state of the cathode-side end plate and the sealing member being mounted in the fuel cell stack in Embodiment 1 of the present invention.
FIG. 8B is a sectional view taken along line 8B-8B of FIG. 8A.
FIG. 8C is a sectional view taken along line 8C-8C of FIG. 8A.
FIG. 8D is a sectional view taken along line 8D-8D of FIG. 8A.
FIG. 9 is a sectional view explaining a structure of a fuel cell stack in Embodiment 2 of the present invention.
FIG. 10A is a perspective plan view explaining a structure of a separator of the fuel cell stack in Embodiment 2 of the present invention.
FIG. 10B is a sectional view taken along line 10B-10B of FIG. 10A.
FIG. 10C is a sectional view taken along line 10C-10C of FIG. 10A.
FIG. 10D is a sectional view taken along line 10D-10D of FIG. 10A.
FIG. 11 is a sectional view explaining a structure of a fuel cell stack in Embodiment 3 of the present invention.
FIG. 12A is a perspective view showing a structure of another example of a fuel cell in Embodiment 3 of the present invention.
FIG. 12B is a sectional view taken along line 12B-12B of FIG. 12A.

### PREFERRED EMBODIMENTS FOR CARRYING OUT OF THE INVENTION

Embodiments of the present invention are described hereinafter with reference to drawings by taking a direct methanol fuel cell (DMFC) as an example. It is to be noted that the present invention is not restricted to descriptions given below so long as being based upon basic characteristics described in the specification.

### Embodiment 1

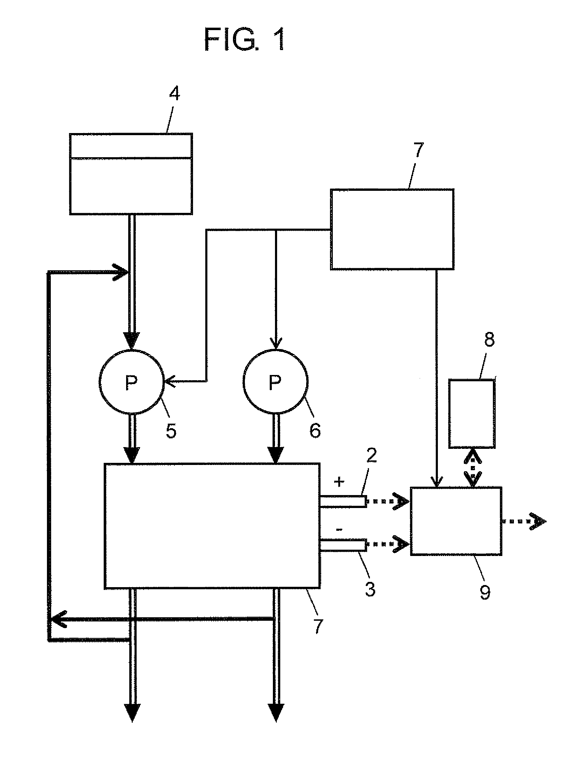

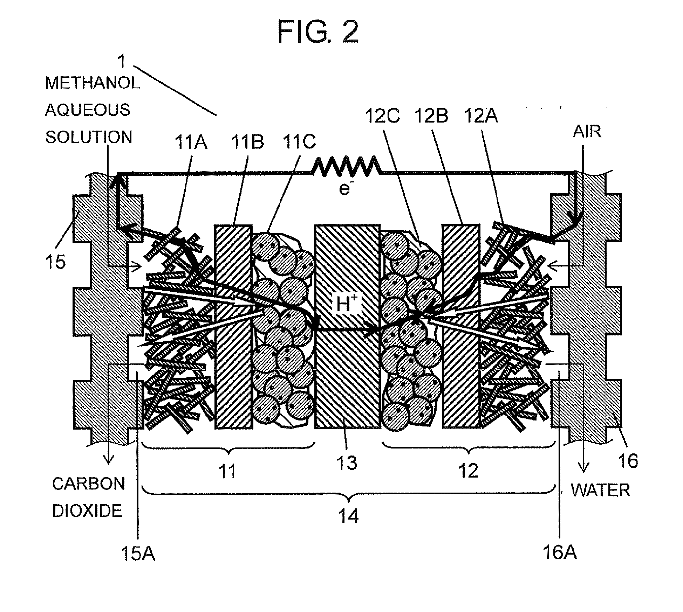

FIG. 1 is a block diagram showing a configuration of a fuel cell in Embodiment 1 of the present invention. FIG. 2 is a sectional schematic view explaining a power generating operation of the fuel cell in Embodiment 1 of the present invention. A brief summary and an operation of the fuel cell are described hereinafter with reference to FIGS. 1 and 2.

As shown in FIG. 1, the fuel cell at least has fuel cell stack 1, fuel tank 4, fuel pump 5, air pump 6, control section 7, storage section 8 and DC/DC converter 9. Further, fuel cell stack 1 has a power generating section, and generated power is outputted from positive terminal 2 and negative terminal 3. The outputted power is then inputted into DC/DC converter 9. At this time, fuel pump 5 supplies anode electrode 11 of fuel cell stack 1 with a fuel in fuel tank 4. Air pump 6 supplies cathode electrode 12 of fuel cell stack 1 with a gas such as air as an oxidant. Further, control section 7 controls drives of fuel pump 5 and air pump 6. Moreover, control section 7 controls DC/DC converter 9 to control an output to external equipment (not shown) and charging/discharging of storage section 8. Fuel tank 4, fuel pump 5 and control section 7 constitute a fuel supply section that supplies the fuel to anode electrode 11 inside fuel cell stack 1. Meanwhile, air pump 6 and control section 7 constitute an oxidant supply section that supplies the gas such as the oxidant to cathode electrode 12 inside fuel cell stack 1.

Hereinafter, a structure and an operation of fuel cell stack 1 are briefly described. As shown in FIG. 2, fuel cell stack 1 has membrane electrode assembly (MEA) 14 as a power generating section, and anode-side end plate 15 and cathode-side end plate 16 which are arranged so as to sandwich MEA 14. It is to be noted that in the case of the fuel cell stack being configured by stacking of a plurality of MEAs 14, a separator is provided between MEAs 14, and MEAs 14 are stacked with the separator interposed therebetween. MEA 14 is then sandwiched by anode-side end plate 15 and cathode-side end plate 16 from both end sides of the stacking direction of MEAs 14.

Further, MEA 14 is configured by stacking of anode electrode 11, cathode electrode 12, and electrolyte membrane 13 interposed between anode electrode 11 and cathode electrode 12. Anode electrode 11 is configured by stacking of diffusion layer 11A, microporous layer (MPL) 11B and catalyst layer 11C sequentially from anode-side end plate 15 side. Similarly, cathode electrode 12 is configured by stacking of diffusion layer 12A, microporous layer (MPL) 12B and catalyst layer 12C sequentially from cathode-side end plate 16 side. Moreover, positive terminal 2 and negative terminal 3 are electrically connected to cathode electrode 12 and anode electrode 11, respectively.

Diffusion layers 11A, 12A are made up, for example, of carbon paper, carbon felt, carbon cloth, or the like. MPLs 11B, 12B are made up, for example, of polytetrafluoroethylene or tetrafluoroethylene-hexafluoropropylene copolymer and carbon. Catalyst layers 11C, 12C are each formed in such a manner that a catalyst appropriate for each electrode reaction, such as platinum or ruthenium, is subjected to high dispersion on a carbon surface to form catalyst bodies, and the catalyst bodies are then bound by a binder. Further, electrolyte membrane 13 is made up of an ion-exchange membrane that transmits a hydrogen ion, such as perfluorosulfonate-tetrafluoroethylene copolymer. Anode-side end plate 15, cathode-side end plate 16 and the separator are made up, for example, of a carbon material or stainless steel. Fuel flow channel 15A that circulates the fuel is provided on anode electrode 11 and gas flow channel 16A that circulates the gas such as the oxidant is provided on cathode electrode 12, for example in groove shape or the like.

In fuel cell stack 1 configured as thus described, in FIGS. 1 and 2, an aqueous solution containing methanol as the fuel is supplied to anode electrode 11 by fuel pump 5. The gas such as the air as the oxidant pressurized by air pump 6 is supplied to cathode electrode 12. The methanol aqueous solution supplied to anode electrode 11 and methanol as well as water vapor derived from this aqueous solution are diffused all over MPL 11B in diffusion layer 11A and further pass through MPL 11B) to reach catalyst layer 11C. Similarly, oxygen contained in the air supplied to cathode electrode 12 is diffused all over MPL 12B in diffusion layer 12A and passes through MPL 12B, to reach catalyst layer 12C. Methanol having reached catalyst layer 11C reacts as in Formula 1, and oxygen having reached catalyst layer 12C reacts as in Formula 2.

CH₃OH + H₂O → CO₂ + 6H⁺ + 6e⁻ Formula 1

3/2O₂ + 6H⁺ + 6e⁻→ 3H₂O Formula 2

Consequently, power is generated along with production of carbon dioxide on anode electrode 11 side and water on cathode electrode 12 side respectively as reaction products. Carbon dioxide is then discharged to the outside of the fuel cell. Similarly, a gas not reacting in cathode electrode 12, such as nitrogen, and unreacted oxygen are also discharged to the outside of the fuel cell. At this time, since all of methanol in the methanol aqueous solution does not react on anode electrode 11 side, as shown in FIG. 1, the discharged methanol aqueous solution is returned to fuel pump 5 (arrow A). Further, since water is consumed in the reaction of anode electrode 11, as shown in FIG. 1, water generated in cathode electrode 12 may be returned to anode electrode 11 side (arrow B).

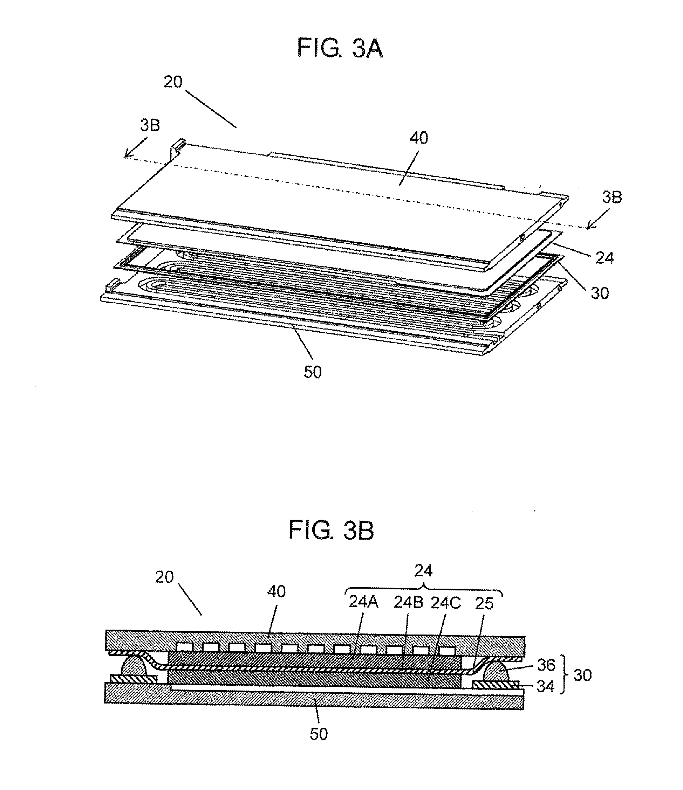

The structure of the fuel cell stack in Embodiment 1 of the present invention, and especially the sealing structure as a point of the present invention, are detailed hereinafter with reference to FIGS. 3A to 8D.

FIG. 3A is an exploded perspective view of the fuel cell stack in Embodiment 1 of the present invention. FIG. 3B is a sectional view taken along line 3B-3B of FIG. 3A. At this time, FIG. 3B shows each constitutional element of FIG. 3A by means of a sectional view of an integrated fuel cell stack.

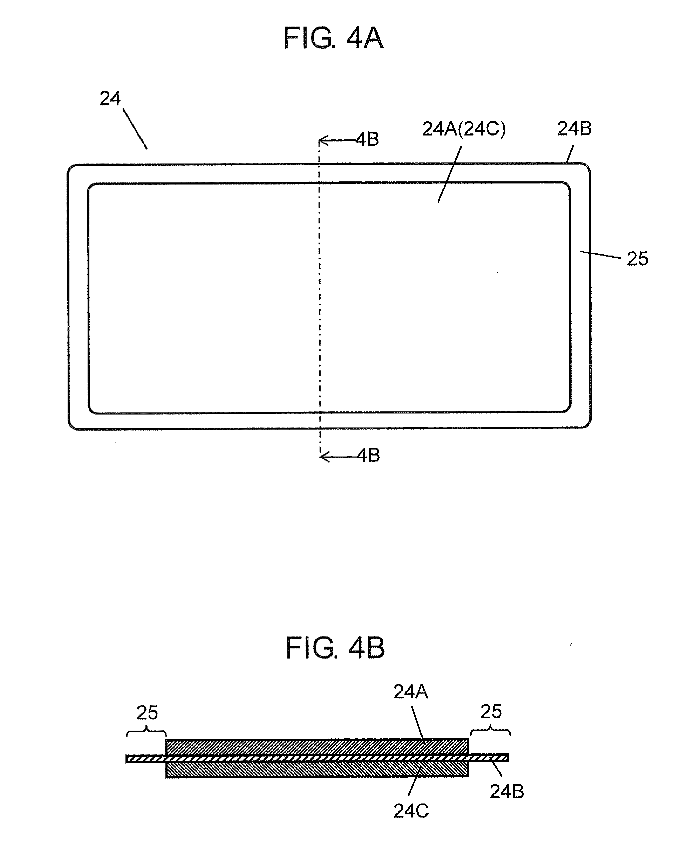

Further, FIGS. 4A to 8D are views explaining constitutional elements constituting the fuel cell stack in Embodiment 1 of the present invention.

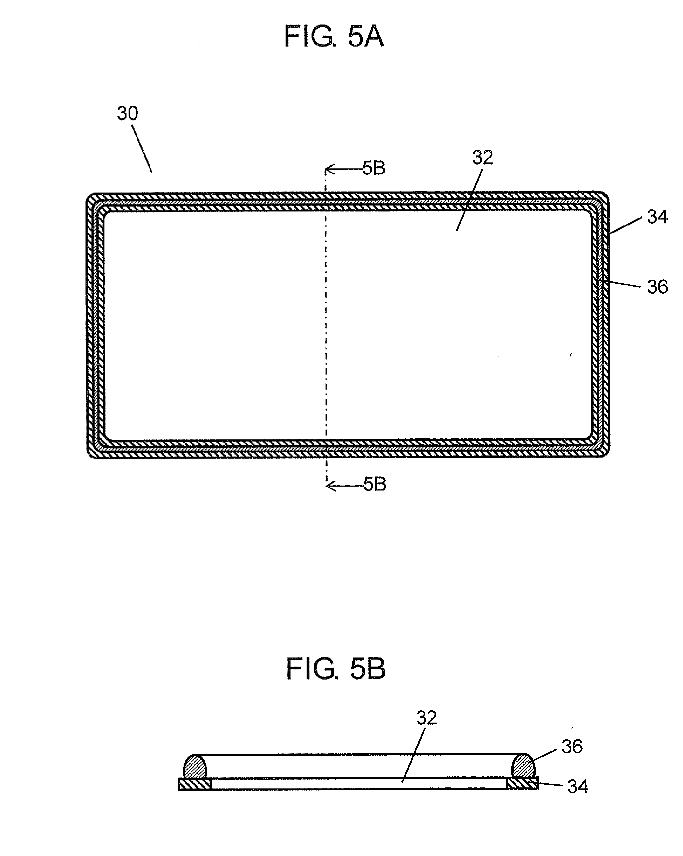

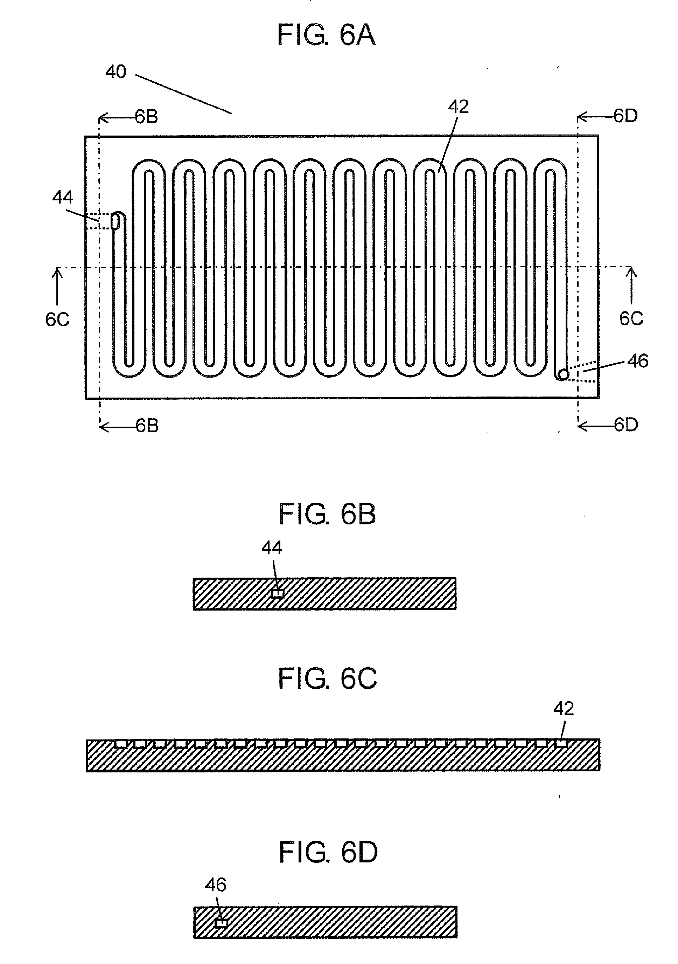

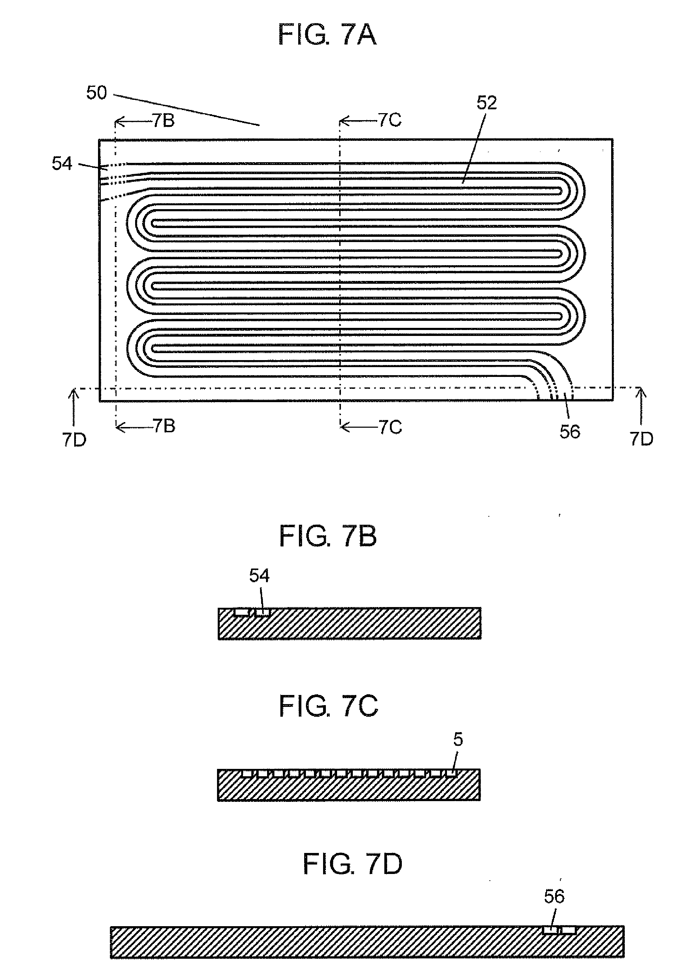

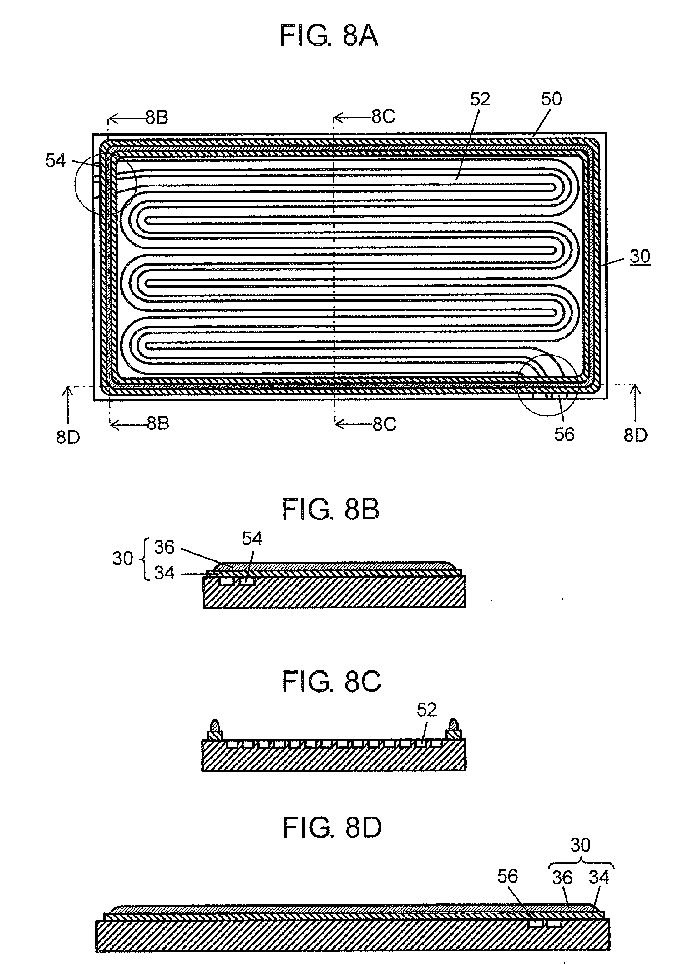

FIG. 4A is a plan view of the membrane electrode assembly, and FIG. 4B is a sectional view taken along line 4B-4B of FIG. 4A. FIG. 5A is a plan view of the sealing member, and FIG. 5B is a sectional view taken along line 5B-5B of FIG. 5A. FIG. 6A is a plan view of the anode-side end plate, FIG. 6B is a sectional view taken along line 6B-6B of FIG. 6A, FIG. 6C is a sectional view taken along line 6C-6C of FIG. 6A, and FIG. 6D is a sectional view taken along line 6D-6D of FIG. 6A. FIG. 7A is a plan view of the cathode-side end plate, FIG. 7B is a sectional view taken along line 7B-7B of FIG. 7A, FIG. 7C is a sectional view taken along line 7C-7C of FIG. 7A, and FIG. 7D is a sectional view taken along line 7D-7D of FIG. 7A. FIG. 8A is a plan view explaining a state of the cathode-side end plate and the sealing member being mounted, FIG. 8B is a sectional view taken along line 8B-8B of FIG. 8A, FIG. 8C is a sectional view taken along line 8C-8C of FIG. 8A, and FIG. 8D is a sectional view taken along line 8D-8D of FIG. 8A.

As shown in FIGS. 3A and 3B, anode-side end plate 40, membrane electrode assembly 24, sealing member 30 that realizes the sealing structure and cathode-side end plate 50 are stacked, and integrated through a fastening member not shown in the figures, to constitute fuel cell stack 20 of the present embodiment.

Herein, as shown in FIGS. 4A and 4B, electrolyte film 24B is sandwiched between anode electrode 24A and cathode electrode 24C, to constitute membrane electrode assembly 24. Further, electrolyte film 24B has protruding section 25 exposed from the peripheries of anode electrode 24A and cathode electrode 24C.

Moreover, as shown in FIGS. 5A and 5B, sealing member 30 is made up of ringed substrate 34 provided with opening 32, and elastic body 36 formed on one surface of substrate 34 and at least in contact with protruding section 25 of electrolyte film 24B in membrane electrode assembly 24. Opening 32 is at least formed larger than the periphery of anode electrode 24A or cathode electrode 24C. Hence substrate 34 is structured so as to make anode electrode 24A and cathode electrode 24C present inside. At this time, as substrate 34, for example, polyethylene terephthalate (PET), polyethylene naphthalate, polyether nitrile (PEN), polyimide, or the like can be used. It is of importance that the mechanical strength of substrate 34 be sufficiently large strength for compressing elastic body 36 and be sufficiently larger than the pressing force generated at the time of stacking of fuel cell stack 1. Therefore, for example in a case of the pressing force being 0.2 MPa, a material having a Young's modulus not smaller than 1 GPa is particularly preferred. Therefore, a glass epoxy substrate (FR-4) having a Young's modulus of the order of 27GPa, or the like, would be satisfactorily used. Moreover, as elastic body 36, a material having a Young' modulus, for example, of 1 MPa to 5 MPa, such as a rubber type resin, is used. In this case, a material having a Young's modulus substantially equal to or larger than the Young's modulus of electrolyte film 24B in membrane electrode assembly 24 is particularly preferred. Specifically used can be high saturated rubber such as fluorine rubber, ethylene-propylene based rubber and hydrogenated nitrile rubber, high saturated thermoplastic elastomer such as hydrogenated styrene-butadiene copolymer and hydrogenated styrene-isoprene copolymer, and the like. As thus described, protruding section 25 and sealing member 30 constitute the sealing structure.

As shown in FIG. 6A, anode-side end plate 40 is at least provided with fuel flow channel 42 that circulates the fuel such as methanol in, for example, the shape of a zig-zag groove on the surface opposed to the surface of the anode electrode in membrane electrode assembly 24. At this time, as shown in FIGS. 6B and 6D, a through hole that reaches fuel flow channel 42 is provided as fuel inlet 44 or fuel outlet 46 of fuel flow channel 42 on, for example, each of side surfaces in two directions of anode-side end plate 40.

Further, as shown in FIG. 7A, cathode-side end plate 50 is at least provided with gas flow channel 52 that circulates the gas such as the air to be the oxidant in, for example, the shape of a zig-zag groove on the surface opposed to the surface of the cathode electrode in membrane electrode assembly 24, so as to be orthogonal to fuel flow channel 42. At this time, as shown in FIGS. 7B and 7D, oxidant inlet 54 or oxidant outlet 56 of gas flow channel 52 is provided such that gas flow channel 52 reaches, for example, each of side surfaces in two directions of cathode-side end plate 50 while remaining in groove shape. This is because such a through hole as fuel inlet 44 of anode-side end plate 40 would cause occurrence of pressure loss in the case of injecting the gas such as the air. For reduction in this pressure loss, it is preferable to form gas flow channel 52 to the side surface while remaining in the groove shape.

Each of the constitutional elements described above is stacked as shown in FIGS. 3A and 3B so that elastic body 36 of sealing member 30 comes into contact with anode-side end plate 40 with protruding section 25 of electrolyte film 24B in membrane electrode assembly 24 interposed therebetween. Further, substrate 34 of sealing member 30 comes into contact with cathode-side end plate 50. In such a manner, fuel cell stack 20 is formed. At this time, with convex elastic body 36 formed on substrate 34 as sealing member 30, an area in contact with electrolyte film 24B is smaller than an area in contact with substrate 34. The pressing force of sealing member 30, which forms the sealing structure, on the anode electrode side becomes larger than the pressing force on the cathode electrode side. This leads to compression of electrolyte film 24B by large pressing force of elastic body 36 in sealing member 30, thus allowing hermetic sealing with high sealing surface pressure.

Accordingly, the fuel such as methanol that is supplied to anode electrode 11, unreacted methanol and carbon dioxide that are generated after the reaction, and the like can be reliably prevented from leaking through the contact surface between anode-side end plate 40 and electrolyte film 24B. Further, displacement associated with transformation of elastic body 36 due to pressing force can be prevented by substrate 34.

Meanwhile, as shown in FIGS. 8B or 8D, the upper surface of the groove shape in the vicinity of inlet 54 or outlet 56 (area shown with a circle in FIG. 8A) of gas flow channel 52 formed on cathode-side end plate 50 is crossed over and sealed by substrate 34 of sealing member 30. At this time, with the mechanical strength of substrate 34 being sufficiently larger than the pressing force generated at the time of stacking of fuel cell stack 1, transformation of substrate 34 toward the inside of the groove on the gas flow channel by the pressing force is suppressed. It is thus possible to uniformly ensure cross-sectional areas of gas flow channel 52, and inlet 54 and outlet 56 which are formed by substrate 34 and gas flow channel 52. Further, since the pressing force to compress electrolyte film 24B through elastic body 36 of sealing member 30 does not decrease even on the groove, it is possible to prevent deterioration in sealing performance.

Moreover, since elastic body 36 provided on one side of substrate 34 in sealing member 30 presses electrolyte film 24B, as shown in FIG. 3B, electrolyte film 24B transforms into, for example, S shape to realize the sealing structure, thereby to form a space on anode electrode 11. This space then becomes a space where the fuel such as methanol bypasses without passing along fuel flow channel 42, and it is thereby preferable to make sealing member 30 shaped to have this space as small as possible. Meanwhile, in the case of sealing by coming into close contact with cathode-side end plate 50 through substrate 34, the sealing is performed by a small pressing force as compared with the pressing force on the anode electrode side. However, substrate 34 and cathode-side end plate 50 are in close contact with each other on the flat surfaces thereof, making it possible to sufficiently prevent leakage of the air or the like as the oxidant that is supplied to cathode electrode 24C. Further, with progression of power generation, dew condensation of generated water vapor and moisture enter the interface between substrate 34 and cathode-side end plate 50, thereby allowing further realization of the sealing structure through the moisture. It is thereby possible to efficiently prevent the leakage during power generation.

As thus described, according to Embodiment 1, it is possible to realize the sealing structure that prevents the fuel that is supplied to anode electrode 24A and the gas containing the air or the like as the oxidant that is supplied to cathode electrode 24C from flowing in the stacking direction of membrane electrode assembly (MEA) 24 and a direction different from the stacking direction.

Further, according to Embodiment 1, it is possible to realize a reliable sealing structure by means of a simple configuration to compress and press one side of electrolyte film 24B through sealing member 30 made up of elastic body 36 formed on the one side of substrate 34. It is therefore possible to realize a fuel cell stack which simplifies positioning of each constitutional element, and the like, and is thus excellent in assembly property.

Moreover, according to Embodiment 1, sealing member 30 is made up of substrate 34 with high shape stability, thereby making it unnecessary to form sealing member 30 integrally with cathode-side end plate 50 or the like. Consequently, since the fuel cell stack can be formed by stacking, while mounting, each constitutional element, even when the constitutional element becomes defective after the assembly, it is possible to replace the element with ease, so as to produce a fuel cell stack with high productivity and low cost.

In addition, in Embodiment 1, the description has been given by means of the example where sealing member 30, anode-side end plate 40 and cathode-side end plate 50 are in contact with one another on the flat surfaces thereof, but this is not restrictive. For example, a semicircular concave section may be formed in a position of anode-side end plate 40 which is opposed to elastic body 36 of sealing member 30, or a concave section to be fitted with substrate 34 of sealing member 30 may be formed on cathode-side end plate 50. This can further improve sealing performance and positioning accuracy.

Further, according to Embodiment 1, the description has been given by means of the example of mutually orthogonal arrangement of fuel flow channel 42 and gas flow channel 52, but this is not restrictive. For example, those channels may be formed in the same direction, or may be formed so as to be opposed to each other by a predetermined angle. This can enhance degrees of freedom in design.

Moreover, according to Embodiment 1, the description has been given by means of the example where the width of substrate 34 of sealing member 30 is made uniform, this is not restrictive. For example, the area of the position of substrate 34 which crosses over the groove of gas flow channel 52 may be made larger. It is thereby possible to further increase the mechanical strength of substrate 34 and further suppress transformation due to the pressing force of elastic body 36 in the position of the groove, so as to improve the sealing performance.

Furthermore, according to Embodiment 1, the description is given, illustrating the cross sectional shapes of fuel flow channel 42 and gas flow channel 52 being in the rectangular shapes, but this is not restrictive. For example, the cross sectional shape may be a polygonal shape such as a semicircular, triangle or trapezoidal shape.

Additionally, according to Embodiment 1, the description has been given by means of the example where the inlets and the outlets of fuel flow channel 42 and gas flow channel 52 are provided on the side surfaces opposed to each other or the side surfaces adjacent to each other, but this is not restrictive. For example, the inlet and the outlet may be provided on one side surface, and can be arranged arbitrarily in accordance with arrangement of the fuel pump and the air pump or designing of the fuel cell.

Further, in Embodiment 1, the description has been given by means of the drawings where two gas flow channels are arranged, but this is not restrictive, and the gas flow channel can be arbitrarily provided in accordance with an amount of air needed and the configuration of the fuel cell stack.

### Embodiment 2

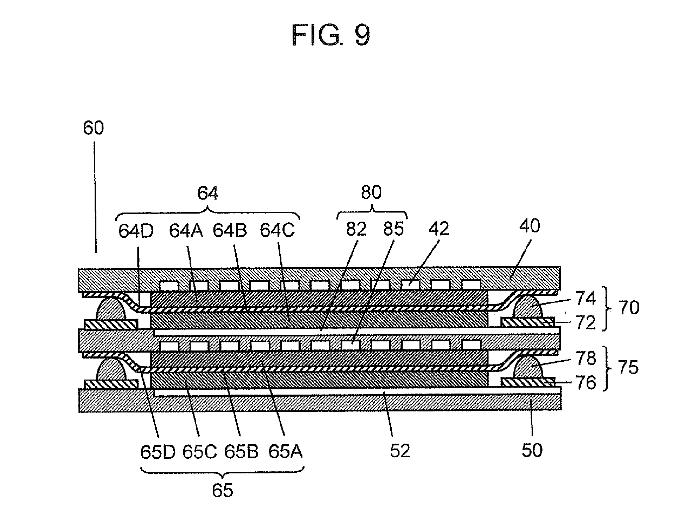

A fuel cell stack according to Embodiment 2 of the present invention is described hereinafter with reference to FIGS. 9 to 10D.

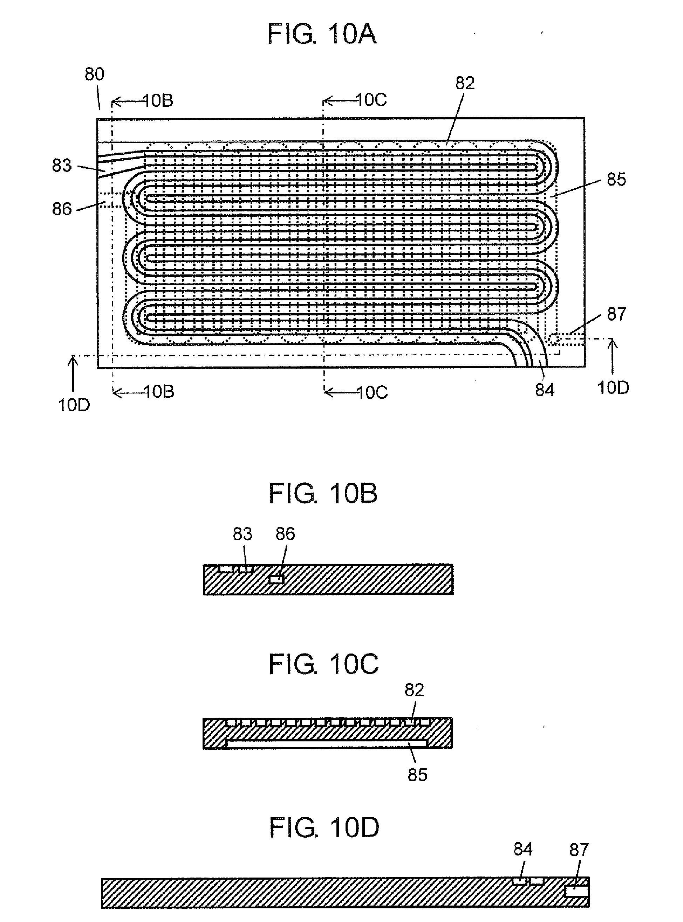

FIG. 9 is a sectional view explaining a structure of a fuel cell stack in Embodiment 2 of the present invention. FIG. 10A is a perspective plan view explaining a structure of a separator of the fuel cell stack in Embodiment 2 of the present invention, FIG. 10B is a sectional view taken along line 10B-10B of FIG. 10A, FIG. 10C is a sectional view taken along line 10C-10C of FIG. 10A, and FIG. 10D is a sectional view taken along line 10D-10D of FIG. 10A. Fuel cell stack 60 of Embodiment 2 is different from fuel cell stack 20 of Embodiment 1 in that two membrane electrode assemblies are stacked with the separator 80 having a fuel flow channel and a gas flow channel interposed therebetween.

Specifically, as shown in FIG. 9, anode-side end plate 40, first membrane electrode assembly 64, second membrane electrode assembly 65, separator 80 provided between those two membrane electrode assemblies, first sealing member 70 and second sealing member 75 that realize a sealing structure, and cathode-side end plate 50 are stacked, and integrated through a fastening member not shown in the figure, to constitute fuel cell stack 60 of the present embodiment.

Herein, as with membrane electrode assembly 24 of Embodiment 1 shown in FIGS. 4A and 4B, first electrolyte 64B and second electrolyte 65B are sandwiched between first anode electrode 64A and first cathode electrode 64C and between second anode electrode 65A and second cathode electrode 65C, to constitute first membrane electrode assembly 64 and second membrane electrode assembly 65. First electrolyte 64B and second electrolyte 65B have first protruding section 64D and second protruding section 65D that are exposed from the peripheries of first anode electrode 64A and first cathode electrode 64C and the peripheries of second anode electrode 65A and second cathode electrode 65C.

Further, as with sealing member 30 in Embodiment 1 shown in FIGS. 5A and 5B, first sealing member 70 is at least made up of ringed first substrate 72 provided with an opening larger than the periphery of the first anode electrode or the first cathode electrode, and first elastic body 74 formed on one surface of first substrate 72 and at least in contact with first protruding section 64D of first electrolyte 64B in first membrane electrode assembly 64. Similarly, second sealing member 75 is at least made up of ringed second substrate 76 provided with an opening larger than the periphery of the second anode electrode 65A or the second cathode electrode 65C, and second elastic body 78 formed on one surface of second substrate 76 and at least in contact with second protruding section 65D of second electrolyte 65B in second membrane electrode assembly 65. Therefore, first substrate 72 is structured so as to make first anode electrode 64A and first cathode electrode 64C present inside. Similarly, second substrate 76 is structured so as to make second anode electrode 65A and second cathode electrode 65C present inside. The protruding section and the sealing member constitute the sealing structure. Further, first membrane electrode assembly 64 and second membrane electrode assembly 65 are sandwiched by anode-side end plate 40 and cathode-side end plate 50 from both sides of the stacking direction.

Similarly to Embodiment 1 shown in FIGS. 6A to 6D, anode-side end plate 40 is at least provided with fuel flow channel 42 that circulates the fuel such as methanol in, for example, the shape of a zig-zag groove on the surface opposed to the surface of first anode electrode in first membrane electrode assembly 64. At this time, as shown in FIGS. 6B and 6D, a through hole (not shown) that reaches fuel flow channel 42 is provided as the fuel inlet or the fuel outlet of fuel flow channel 42 on, for example, each of side surfaces in two directions of anode-side end plate 40.

Further, similarly to Embodiment 1 shown in FIGS. 7A to 7D, cathode-side end plate 50 is at least provided with gas flow channel 52 that circulates the gas such as the air to be the oxidant in, for example, the shape of a zig-zag groove on the surface opposed to the surface of the second cathode electrode in second membrane electrode assembly 65, so as to be orthogonal to fuel flow channel 42. At this time, as shown in FIGS. 7B and 7D, oxidant inlet 54 or oxidant outlet 56 of gas flow channel 52 is provided such that gas flow channel 52 reaches, for example, each of side surfaces in two directions of cathode-side end plate 50 while remaining in groove shape.

As shown in FIGS. 10A to 10D, separator 80, which is provided between first cathode electrode 64C in first membrane electrode assembly 64 and second anode electrode 65A in second membrane electrode assembly 65, has grooved gas flow channel 82 on one surface, and grooved fuel flow channel 85 on the other surface. At this time, as shown in FIGS. 10A, 10B and 10D, oxidant inlet 84 or oxidant outlet 86 of gas flow channel 82 is provided such that gas flow channel 82 reaches, for example, each of side surfaces in two directions of one surface of separator 80 while remaining in groove shape. Similarly, a through hole that reaches fuel flow channel 85 is provided as inlet 86 or outlet 87 of fuel flow channel 85 on, for example, each of side surfaces in two directions of the other surface of separator 80. It is to be noted that separator 80 is made up of a carbon material or stainless steel.

By stacking of each of the above constitutional elements, as shown in FIG. 9, first elastic body 74 of first sealing member 70 comes into contact with anode-side end plate 40 with first protruding section 64D of first electrolyte 64B in first membrane electrode assembly 64 interposed therebetween. Further, first substrate 72 of first sealing member 70 comes into contact with the surface of separator 80 which is formed with gas flow channel 82. Similarly, second elastic body 78 of second sealing member 75 comes into contact with the surface of separator 80 which is formed with fuel flow channel 85 with second protruding section 65D of second electrolyte 65B in second membrane electrode assembly 65 interposed therebetween. Moreover, second substrate 76 of second sealing member 75 comes into contact with the surface of cathode-side end plate 50 which is formed_{'}with gas flow channel 52.

Fuel cell stack 60 is formed in the above manner. At this time, first elastic body 74 and second elastic body 78 in convex shape are formed on first substrate 72 and second substrate 76 as first sealing member 70 and second sealing member 75. For this reason, areas of first elastic body 74 and second elastic body 78 which are in contact with first electrolyte 64B and second electrolyte 65B are smaller than areas of first elastic body 74 and second elastic body 78 which are in contact with first substrate 72 and second substrate 76. Therefore, the pressing force on the anode electrode sides of first sealing member 70 and second sealing member 75, which form the sealing structures, become larger than the pressing force on the cathode electrode sides. This leads to compression of first electrolyte 64B and second electrolyte 65B by large pressing force of first sealing member 70 and second sealing member 75, thus allowing hermetic sealing on the anode electrode side with high sealing surface pressure.

Accordingly, the fuel such as methanol that is supplied to first anode electrode 64A and second electrolyte 65B, unreacted methanol and carbon dioxide that are generated after the reaction, and the like can be reliably prevented from leaking through the contact surfaces between anode-side end plate 40 and first electrolyte 64B and between the separator and second electrolyte 65B. Further, displacement associated with transformation of elastic body due to pressing force can be prevented by the substrate.

Meanwhile, as described with reference to FIGS. 8A to 8D, the upper surfaces of the grooved shapes in the vicinities of inlets 54, 83 and outlets 56, 84 of gas flow channels 52, 82 formed on separator 80 and cathode-side end plate 50 are crossed over and sealed by first substrate 72 of first sealing member 70 and second substrate 76 of second sealing member 75. At this time, with the mechanical strength of first substrate 72 and second substrate 76 being sufficiently larger than the pressing force generated at the time of stacking of the fuel cell stack, transformation of first substrate 72 toward the inside of the groove on gas flow channel 82 and transformation of second substrate 76 toward the inside of the groove on gas flow channel 52 by the pressing force are suppressed. It is thus possible to uniformly ensure cross-sectional areas of the respective gas flow channels and the respective inlets and outlets which are formed by the respective substrates and the gas flow channels. Moreover, since the pressing force to compress first electrolyte 64B and second electrolyte 65B through first elastic body 74 and second elastic body 78 of first sealing member 70 and second sealing member 75 do not decrease even on the grooves, it is possible to prevent deterioration in sealing performance.

According to Embodiment 2, also in the fuel cell stack with two membrane electrode assemblies stacked with the separator interposed therebetween, it is possible to realize a reliable sealing structure with a simple configuration to compress and press first electrolyte 64B and second electrolyte 65B from one sides thereof through first sealing member 70 and second sealing member 75.

Moreover, according to Embodiment 2, similarly to Embodiment 1, each sealing member is made up of the substrate with high shape stability, thereby making it unnecessary to form the sealing structure integrally with cathode-side end plate 50 or separator 80. Consequently, since the fuel cell stack can be formed by stacking, while mounting, each constitutional element and then fastening the stacked elements, even when the constitutional element becomes defective after the assembly, it is possible to replace the element with ease, so as to produce a fuel cell stack with high productivity and low cost.

### Embodiment 3

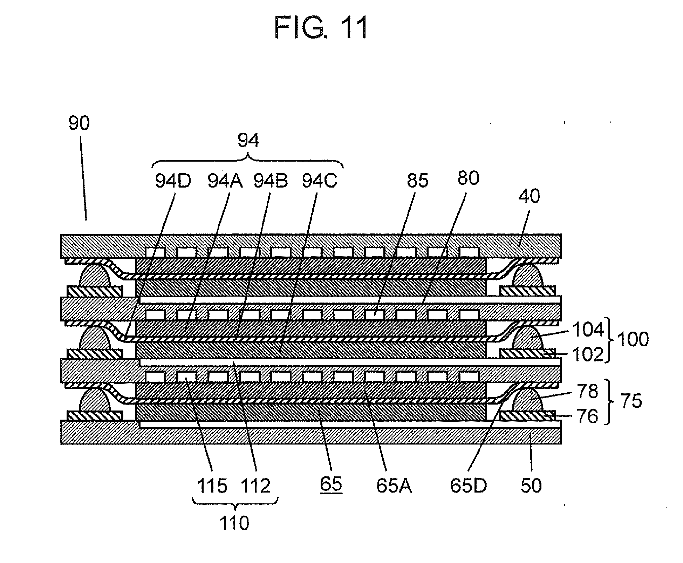

A fuel cell stack in Embodiment 3 of the present invention is described hereinafter with reference to FIG. 11.

FIG. 11 is a sectional view explaining a structure of a fuel cell stack in Embodiment 3 of the present invention. Fuel cell stack 90 of Embodiment 3 is different from fuel cell stack 60 of Embodiment 2 in that three membrane electrode assemblies are provided and one membrane electrode assembly is stacked between two separators having a fuel flow channel and a gas flow channel. A description is given hereinafter with a focus on constitutional elements different from those of fuel cell stack 60 of Embodiment 2.

Specifically, as shown in FIG. 11, third membrane electrode assembly 94, third sealing member 100 that realizes the sealing structure, and separator 110 are inserted in between separator 80 and second anode electrode 65A of second membrane electrode assembly 65 of fuel cell stack 60 of Embodiment 2, stacked with anode-side end plate 40 and cathode-side end plate 50 interposed therebetween, and integrated through a fastening member not shown in the figure, to constitute fuel cell stack 90 of the present embodiment.

Herein, as with membrane electrode assembly 24 of Embodiment 1 shown in FIGS. 4A and 4B, third electrolyte member 94B is sandwiched between third anode electrode 94A and third cathode electrode 94C, to constitute the third membrane electrode assembly 94. Third protruding section 94D is provided which is exposed from the peripheries of third electrolyte member 94B, third anode electrode 94A and third cathode electrode 94C.

Further, as with sealing member 30 of Embodiment 1 shown in FIGS. 5A and 5B, third sealing member 100 is at least made up of ringed third substrate 102 provided with an opening larger than the periphery of the third anode electrode or the third cathode electrode, and third elastic body 104 formed on one surface of third substrate 102 and at least in contact with third protruding section 94D of third electrolyte member 94B in third membrane electrode assembly 94. Therefore, third substrate 102 is structured so as to make third anode electrode 94A and third cathode electrode 94C present inside.

As with separator 80 of Embodiment 2 which is shown in FIGS. 10A to 10D, separator 110, provided between third cathode electrode 94C in third membrane electrode assembly 94 and second anode electrode 65A in second membrane electrode assembly 65, has grooved gas flow channel 112 on one surface, and grooved fuel flow channel 115 on the other surface.

As shown in FIG. 11, by stacking of each of the constitutional elements described above, third elastic body 104 of third sealing member 100 comes into contact with the surface of separator 80 which is formed with fuel flow channel 85 with third protruding section 94D of third electrolyte member 94B in third membrane electrode assembly 94 interposed therebetween. Further, third substrate 102 of third sealing member 100 comes into contact with the surface of separator 11a which is formed with gas flow channel 112. The surface of separator 110 which is formed with fuel flow channel 115 is opposed to second anode electrode 65A in second membrane electrode assembly 65. Moreover, second elastic body 78 of second sealing member 75 comes into contact with the surface of separator 110 which is formed with fuel flow channel 115 with second protruding section 65D of second electrolyte 65B interposed therebetween. Other configurations are similar to those of Embodiment 2, and descriptions thereof are omitted.

Fuel cell stack 90 is formed in the above manner. At this time, similarly to the first sealing member and the second sealing member, third elastic body 104 in convex shape is formed on third substrate 102 as third sealing member 100. For this reason, an area of third elastic body 104 which is in contact with third electrolyte member 94B is smaller than an area of third elastic body 104 which is in contact with third substrate 102. This leads to compression of third electrolyte member 94B by large pressing force of third sealing member 100, thus allowing hermetic sealing with high sealing surface pressure.

Accordingly, the fuel such as methanol that is supplied to third anode electrode 94A, unreacted methanol and carbon dioxide that are generated after the reaction, and the like can be reliably prevented from leaking through the contact surface between separator 80 and third electrolyte member 94B and the contact surface between separator 110 and second electrolyte 65B. Further, displacement associated with transformation of third elastic body 104 due to pressing force can be prevented by third substrate 102.

Meanwhile, as described with reference to FIG. 8, the upper surface of the groove shape in the vicinities of inlet 83 or outlet 84 of gas flow channel 112 formed on separator 110 is crossed over and sealed by third substrate 102 of third sealing member 100. At this time, with the mechanical strength of third substrate 102 being sufficiently larger than the pressing force generated at the time of stacking of the fuel cell stack, transformation of third substrate 102 toward the inside of the groove on the gas flow channel by the pressing force is suppressed. It is thus possible to uniformly ensure cross-sectional areas of gas flow channel 112, and inlet 83 and outlet 84 which are formed by third substrate 102 and gas flow channel 112. Further, since the pressing force to compress third electrolyte member 94B through third elastic body 104 of third sealing member 100 does not decrease even on the groove, it is possible to prevent deterioration in sealing performance.

According to Embodiment 3, also in the fuel cell stack with three membrane electrode assemblies stacked with the separators interposed therebetween, similarly to the fuel cell stack of Embodiment 2, it is possible to realize a reliable sealing structure with a simple configuration to compress and press each electrolyte membrane from one side thereof.

Moreover, according to the present embodiment, similarly to , Embodiment 2, each sealing member is made up of the substrate with high shape stability, thereby making it unnecessary to form the sealing structure integrally with the cathode-side end plate, the separator, or the like. Consequently, since the fuel cell stack can be formed by stacking, while mounting, each constitutional element and then fastening the stacked elements, even when the constitutional element becomes defective after the assembly, it is possible to replace the element with ease, so as to produce a fuel cell stack with high productivity and low cost.

It is to be noted that the description has been given by means of the example of the three membrane electrode assemblies in Embodiment 3, this is not restrictive. For example, a fuel cell stack stacked with three or more membrane electrode assemblies with a plurality of separators interposed therebetween may be formed. This can realize a fuel cell stack with an arbitrary configuration such as parallel connection or serial connection in accordance with a voltage, a current or power required by external equipment.

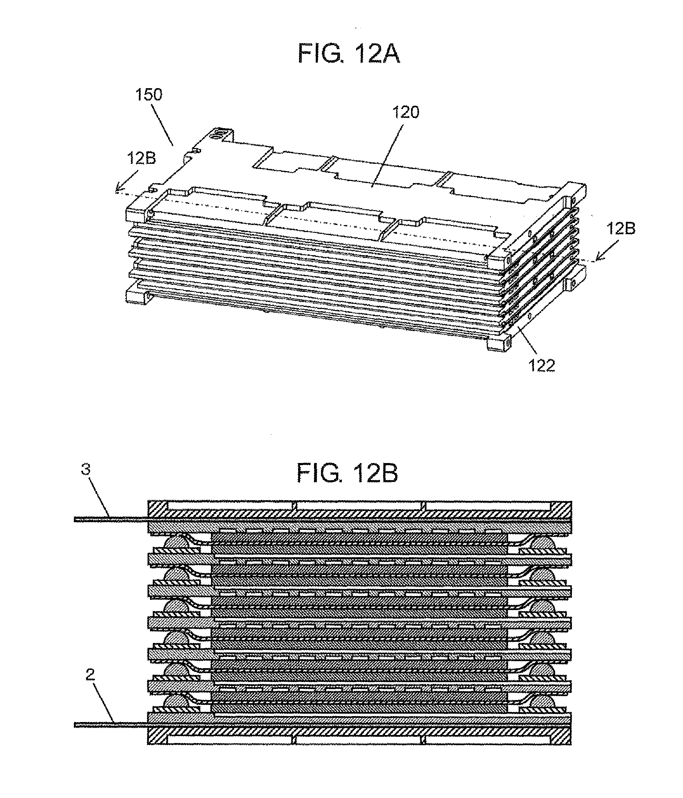

Hereinafter, FIGS. 12A and 12B shows as an example fuel cell stack 150 having six membrane electrode assemblies. FIG. 12A is a perspective view showing a structure of another example of a fuel cell in Embodiment 3 of the present invention, and FIG. 12B is a sectional view taken along line 12B-12B of FIG. 12A.

As shown in FIGS. 12A and 12B, similarly to the fuel cell stack of Embodiment 3, fuel cell stack 150 is made up of six membrane electrode assemblies, five separators each provided among those assemblies, and an anode-side end plate and a cathode-side end plate which vertically sandwich those assemblies. At this time, anode-side backing plate 120 and cathode-side backing plate 122 are provided according to the need for the purpose of uniformly pressurizing and holding the fuel cell stack. Herein, anode-side backing plate 120 and cathode-side backing plate 122 are made up, for example, of an insulating resin, a resin containing ceramic or a glass fiber, a metal plate coated with an insulating film, or the like. It is to be noted that anode-side backing plate and cathode-side backing plate may also be applied to the above embodiments.

The description has been given in each of the above embodiments by taking the DMFC as the example, but this is not restrictive, and the configuration of the present invention is applicable to any fuel cell so long as the fuel cell uses a similar power generating element to one used in a fuel cell stack. For example, the configuration of the present invention is applicable to a so-called polymer solid electrolyte fuel cell, methanol reforming fuel cell and the like, which use hydrogen as a fuel.

Further, the description has been given in each of the above embodiments by basically taking as the example the fuel cell stack that prevents leakage of the fuel and the gas and has excellent reliability, but this is not restrictive. For example, as shown in FIG. 1, a fuel cell may be at least made up of the fuel cell stack in each of the above embodiments, the fuel supply section that supplies the anode electrode with the fuel, and the oxidant supply section that supplies the cathode electrode with the oxidant. This can realize a fuel cell excellent in leakage resistance and further easy to assemble and replace, thus having high reliability.

### INDUSTRIAL APPLICABILITY

The fuel cell stack of the present invention and the fuel cell using the same are useful as a power source of electronic equipment especially required to have high reliability as well as a compact size and portability.

### REFERENCE MARKS IN THE DRAWINGS

1, 20, 60, 90, 150 Fuel cell stack
2 Positive terminal
3 Negative electrode
4 Fuel tank
5 Fuel pump
6 Air pump
7 Control section
8 Storage section
9 DC/DC converter
11 Anode electrode
11A, 12A Diffusion layer
11B, 12B Microporous layer (MPL)
11C, 12C Catalyst layer
12 Cathode electrode
13 Electrolyte membrane
14, 24 Membrane electrode assembly (MEA)
15, 40 Anode-side end plate
15A, 42, 85, 115 Fuel flow channel
16, 50 Cathode-side end plate
16A, 52, 82, 112 Gas flow channel
24A Anode electrode
24B Electrolyte film
24C Cathode electrode
25 Protruding section
30 Sealing member
32 Opening
34 Substrate
36 Elastic body
44, 54, 83, 86 Inlet
46, 56, 84, 87 Outlet
64 First membrane electrode assembly
64A First anode electrode
64B First electrolyte
64C First cathode electrode
64D First protruding section
65 Second membrane electrode assembly
65A Second anode electrode
65B Second electrolyte
65C Second cathode electrode
65D Second protruding section
70 First sealing member
72 First substrate
74 First elastic body
75 Second sealing member
76 Second substrate
78 Second elastic body
80, 110 Separator
94 Third membrane electrode assembly
94A Third anode electrode
94B Third electrolyte member
94C Third cathode electrode
94D Protruding section
100 Third sealing member
102 Third electrode
104 Third elastic body
120 Anode-side backing plate
122 Cathode-side backing plate

## Claims

1. A fuel cell stack, comprising:
a membrane electrode assembly, formed by stacking an anode electrode, a cathode electrode, and an electrolyte membrane interposed between the anode electrode and the cathode electrode; and
a sealing structure for preventing a fuel that is supplied to the anode electrode and a gas containing an oxidant that is supplied to the cathode electrode from leaking in a direction different from a stacking direction of the membrane electrode assembly, wherein
pressing force of the sealing structure on the anode electrode side is set larger than pressing force on the cathode electrode side.

2. The fuel cell stack according to claim 1, further comprising:
an anode-side end plate;
a cathode-side end plate; and
a sealing member, provided between the anode-side end plate and the cathode-side end plate, wherein
the membrane electrode assembly is sandwiched by the anode-side end plate and the cathode-side end plate from both sides of the stacking direction of the membrane electrode assembly,
the electrolyte membrane has a protruding section exposed from the anode electrode and the cathode electrode,
the sealing member is at least provided with a ringed substrate that makes the anode electrode and the cathode electrode present inside, and a ringed elastic body formed on the substrate,
the elastic body is compressed by pressing the protruding section onto the anode-side end plate, while pressing the substrate onto the cathode-side end plate, and
the protruding section of the electrolyte membrane and the sealing member constitute the sealing structure.

3. The fuel cell stack according to claim 2, wherein
a grooved gas flow channel for circulating the gas is provided on a surface of the cathode-side end plate which is opposed to the cathode electrode, while reaching a side surface of the cathode-side end plate, and
the substrate has sufficient strength for compressing the elastic body at a portion crossing over the gas flow channel.

4. The fuel cell stack according to claim 2, wherein
an area of the elastic body which is in contact with the protruding section is smaller than an area of the elastic body which is in close contact with the substrate.

5. The fuel cell stack according to claim 1, comprising two of the membrane electrode assemblies,
the stack further comprising:
a separator, provided between the membrane electrode assemblies;
an anode-side end plate;
a cathode-side end plate;
a first sealing member, provided between the separator and the anode-side end plate; and
a second sealing member, provided between the separator and the cathode-side end plate, wherein
two of the membrane electrode assemblies are sandwiched by the anode-side end plate and the cathode-side end plate from both sides of the stacking direction of the membrane electrode assembly,
the electrolyte membrane has a protruding section exposed from the anode electrode and the cathode electrode,
the first sealing member is provided with a ringed first substrate and a ringed first elastic body formed on the first substrate, and the first elastic body compresses by pressing the protruding section onto the anode-side end plate, while pressing the first substrate onto the separator,
the second sealing member is provided with a ringed second substrate and a ringed second elastic body formed on the second substrate, and the second elastic body compresses so as to press the protruding section onto the separator, while pressing the second substrate onto the cathode-side end plate, and
the protruding section of the electrolyte membrane, the first sealing member and the second sealing member constitute the sealing structure.

6. The fuel cell stack according to claim 5, wherein
grooved gas flow channels for circulating the gas are provided respectively on the cathode-side end plate and a surface of the separator which is opposed to the cathode electrode, while reaching side surfaces of the cathode-side end plate and the separator, and
the first substrate and the second substrate have sufficient strength for compressing the first elastic body and the second elastic body at portions crossing over the gas flow channels.

7. The fuel cell stack according to claim 5, wherein areas of the first elastic body and the second elastic body which are in contact with the protruding section of the electrolyte membrane are smaller than areas of the first elastic body and the second elastic body which are in close contact with the first substrate and the second substrate.

8. The fuel cell stack according to claim 5, comprising
three or more of the membrane electrode assemblies,
the stack further comprising
a third sealing member, provided between the separator arranged on an anode side and the separator arranged on a cathode side among the separators, wherein
the third sealing member is provided with a ringed third substrate and a ringed third elastic body formed on the third substrate, and the third elastic body is compressed by pressing the protruding section onto the separator arranged on the anode side, while pressing the third substrate onto the separator arranged on the cathode side, and
the protruding section of the electrolyte membrane, the first sealing member, the second sealing member and the third sealing member constitute the sealing structure.

9. The fuel cell stack according to claim 8, wherein
grooved gas flow channels for circulating the gas are provided on the cathode-side end plate and a surface of the separator which is opposed to the cathode electrode, while reaching side surfaces of the cathode-side end plate and the separator, and
the first substrate, the second substrate and the third substrate have sufficient strength for compressing the first elastic body, the second elastic body and the third elastic body at portions crossing over the gas flow channels.

10. The fuel cell stack according to claim 8, wherein areas of the first elastic body, the second elastic body and the third elastic body which are in contact with the protruding section of the electrolyte membrane are smaller than areas of the first elastic body, the second elastic body and the third elastic body which are in close contact with the first substrate, the second substrate and the third substrate.

11. A fuel cell, comprising:
a fuel cell stack according to claim 1;
a fuel supply section that supplies an anode electrode with a fuel; and
an oxidant supply section that supplies a cathode electrode with an oxidizer.
